# EUROPEAN PATENT SPECIFICATION

(11) **EP 0 626 393 B1**
(45) Date of publication and mention of the grant of the patent: **24.11.1999**
(21) Application number: 94302381.2
(22) Date of filing: 05.04.1994
(51) Int. Cl.: C08F 4/02, C08F 110/02

(54) **Ziegler-type spherical catalyst for olefin polymerization, its preparation and its use**
Sphärischer Ziegler-Katalysator zur Olefinpolymerisation, seine Herstellung und Verwendung
Catalyseur sphérique Ziegler pour polymérisation des oléfines, sa préparation et son utilisation

(30) Priority: 05.04.1993 BR 9301438
(43) Date of publication of application: 30.11.1994
(73) Proprietor: PETROLEO BRASILEIRO S.A. - PETROBRAS, Rio de Janeiro (BR)
(72) Inventor: Correia Da Silva, Jaime, Jacarepaguà - Rio De Janeiro(RJ) (BR); Coelho De Figueiredo, Cecilia Maria, Laranjeiras, Rio De Janeiro (RJ) (BR)
(74) Representative: Woods, Geoffrey Corlett

(56) References cited:
- EP-A- 0 243 190
- US-A- 4 983 693
- DATABASE WPI Section Ch, Week 8809, Derwent Publications Ltd., London, GB; Class C, AN 88-061009 & JP-A-63 017 220 (MITSUBISHI CHEM) 25 January 1988
- DATABASE WPI Section Ch, Week 9346, Derwent Publications Ltd., London, GB; Class C, AN 93-364938 & JP-A-5 270 819 (DENKI KAGAKU KOGYO) 19 October 1993

## Description

The present invention relates to a spherical catalyst which may be used in Ziegler-Natta catalyst systems for the low pressure polymerization of alpha-olefins, to the preparation of the catalyst and to the preparation of spherical polyolefins using the catalyst. In particular, the invention relates to ultra-high molecular weight polyethylene and to its preparation in the presence of such catalyst. The invention also relates to a spherical catalyst support from which the catalyst is prepared and to its preparation. The catalyst prepared from the support and the polyolefin prepared using the catalyst exhibit the spherical shape of the support. This leads to improved flow and morphological properties of the polyolefin prepared.

In Ziegler-Natta type polymerisation reactions, there is a demand for catalysts which provide improved processing and which yield polymers having increased bulk density and requiring the use of lower amounts of antioxidant to make the polymer storage stable. These aspects are believed to be linked to the morphology of the product polymer and this area has been the focus of numerous studies.

It is known to use supported catalysts to control the morphology of the polymer and it has been observed that there is a direct relationship between the morphology of the catalyst support and that of the polymer. This is the so-called replication phenomenon. For example, according to FR 1,550,186, if the support is microspherical in shape the polymer which is obtained is in the shape of small spheres.

FR 2,071,111 describes the preparation of a supported catalyst for use in Ziegler-Natta catalyst systems. The catalyst is prepared by reducing on an inert support a Group IV, V or VI metal halide, the metal being in its maximum valence state with, for example, an organoaluminium compound, both reactants being in liquid form. The support is in the form of "cenospheres" which are round bodies having diameters between 50 and 250 microns, composed of agglomerated particles having diameters between 0.2 and 2 microns. The external shape of the cenospheres determines the morphology of the final product obtained with the supported catalyst. However, the use of this type of support has the drawback that its preparation in industry is not particularly practical.

According to A. Munoz-Escalona, Polymer Preprints of the American Chemical Society, Division of Polymer Chemistry, 24(1), pages 112-13 (1983), the catalyst support controls the morphology of the polymer using supported Ziegler-Natta catalysts independently of the polymerization technique employed. However, in the polymerization of ethylene catalyzed by Et₂AlCl-TiCl₄, A. Munoz-Escalona and A. Sierraalta, Act Cient. Venez. 34 (3-4), pages 203-8 (1983) describe that the Al/Ti ratio in the catalyst also contributes to the morphology of polyethylene produced. An increase in the Al/Ti ratio is said to cause an increase in crystallinity, density and particle size of the polymer. As the Al/Ti ratio increases the bulk density also increases while the molecular weight is reduced.

EP 468070 (corresponding to JP 221112) in the name of J. Kanoh et al describes a process for preparing spherical silica gel by spray drying a silica hydrogel paste and water, the amount of water present in the paste being adjusted to 0.2 to 1.5 times the weight of silica hydrogel. The silica hydrogel paste is obtained by reaction of an alkali metal silicate salt and a mineral acid followed by humid granulation of the hydrogel silica, the pH of the silica hydrogel being from 1 to 3. Although the spherical silica obtained is said to be suitable for use as a catalyst support, there is no example of the silica being used as such.

The applicants' Brazilian patent PI BR 8005302, describes a process for the preparation of alumina useful as a catalyst support by the reaction of aluminium sulfate or nitrate and ammonium bicarbonate. The reaction yields a precipitate which is then calcined thereby forming the support.

USP 4,983,693 (corresponding to PI BR 8707098), also in the name of the present applicants, describes a catalyst for use in Ziegler-Natta catalyst systems for the polymerization of alpha-olefins. The catalyst is obtained by impregnating an alumina support prepared by the method described in PI BR 8005302 with from 0.8 to 1.0 weight % of titanium. The preferred method of preparing the catalyst support is by the initial formation of a slurry of so-called ammonium dawsonite (NH₄AlCO₃(OH)₂) by reaction of aqueous solutions of aluminium sulfate and ammonium bicarbonate. The reaction typically takes place at 15-20°C, the pH being maintained between 7.5 and 7.7 by the addition of ammonium hydroxide yielding a slurry containing from 10 to 20 weight % of residual sulfate ions. Usually, the concentration of the aqueous aluminium sulfate solution is 216g/l and that of the aqueous ammonium bicarbonate solution 230g/l. Such solutions are commercially available.

The ammonium dawsonite is then calcined at 600-800°C for 4-10 hours to yield an alumina support having a surface area of 200-400 m²/g, a pore volume of 1.5 to 3.5 cm²/g and where 85% of the pores are greater than 100 Å. In order to avoid sulfate losses, the ammonium dawsonite is not washed prior to calcination. Elimination of sulfate ions leads to a dramatic reduction in the activity of the final catalyst system.

Impregnation of the alumina support typically takes place by reacting the alumina with a solution of titanium halide in an aliphatic hydrocarbon, for example n-hexane. This typically takes place at a temperature of from 80-140°C for approximately 1 hour with agitation. Usually this is followed by cooling to 60-65°C and subsequent washing of the catalyst product with hydrocarbon solvent. The catalyst is activated using, for example, triisobutylaluminium or triethylaluminium, the Al/Ti molar ratio in the catalyst typically being 15/1 to 60/1.

Polyethylene obtained using the catalyst has ultra-high molecular weight and outstanding mechanical properties, particularly high impact, abrasion and tensile strength. It is therefore particularly useful as an engineering plastic. However, the polyethylene obtained has poor morphological properties, the polymer particles being irregular in shape. This causes the polymer to have a low bulk density (0.25 to 0.30 g/cm³). While it is possible to improve bulk density by the use of additives, this is expensive and increases the amount of impurities in the finished product.

The irregular morphology of the particles is also responsible for fluidity problems of the polymer. This is detrimental to polymer storage and processing. Storage stability can be improved by the use of antioxidants. However, large amounts are required and as they are toxic the use of plastics containing them in the food industry is severely limited. Products formed by the pressing of irregular shaped polymer particles have reduced abrasion strength because poor particle flow and packing causes air bubbles to be trapped in the product.

Despite extensive studies on the morphology of catalyst supports, the effect this has on catalysts made from these supports and on the polymer produced using the catalyst, to date there has not been provided a spherical catalyst support which can be prepared easily in industry and which has excellent morphological and mechanical properties, in particular good friction strength, which are conveyed to and retained by the catalyst and ultimately by the polymer product. The present invention seeks to provide a spherical catalyst support meeting these requirements.

It has now been found that a spherical catalyst support prepared by the spray-drying of an ammonium dawsonite slurry has excellent mechanical and morphological properties which are preserved in the catalyst based on the support and in the polymer produced using the catalyst. The polymer thus obtained exhibits high bulk density and excellent flow properties due to its regular spherical morphology. The polymer requires little or no antioxidant for storage stability and moreover has excellent processability yielding products having good abrasion strength. The technique by which the support is prepared may conveniently be employed in industry.

Accordingly, the present invention provides a process for the preparation of a spherical alumina catalyst support which comprises calcining an aqueous slurry of ammonium dawsonite comprising from 8 to 10 wt% ammonium dawsonite obtained by reacting an aqueous solution of aluminium sulfate and an aqueous solution of ammonium bicarbonate, characterised in that the aqueous slurry is spray-dried prior to calcination and in that the support comprises sulphate ions.

The ammonium dawsonite slurry may be prepared by known techniques, for example by the methods described in PI BR 8005302 and USP 4,983,693, that is, the slurry is prepared by reacting aqueous solutions of aluminium sulfate and ammonium bicarbonate at a temperature of from 15 to 20°C and a pH of from 7.5 to 7.7, and filtering the slurry obtained such that the aqueous ammonium dawsonite slurry comprises 10 to 20 wt% residual sulfate ions.

Usually, after filtration of the slurry the resulting filter cake is resuspended in water to obtain the appropriate slurry concentration. Preferably, the slurry has an ammonium dawsonite concentration of 8.3 to 9.4 wt %.

Spray-drying usually takes place using a spray-drier having a rotating disk atomizer having an evaporative capacity of 200 kg/hour. Preferably, spray-drying is accomplished using a spray-drier having a disk atomizer rotating at from 10,000 to 14,000 rpm, the entrance temperature to the spray-drier being from 350-450°C and the flow rate from 3.0 to 4.0 kg/minute.

Spray-drying yields spherical support particles typically having a mean diameter of 10 to about 60 µm, for example 35 to 61 µm. Preferably, the mean diameter of the support particles is 30-60 microns, more preferably 40-60 microns. If particles of lower diameters are desired, either the ammonium dawsonite slurry concentration or the spray-drier disk atomizer rotation speed is reduced.

Following spray-drying the dried ammonium dawsonite particles are calcined. Calcination usually takes place at a temperature of 600-700°C for from 4 to 6 and is performed, for example, in a quartz tube placed horizontally in a furnace. It has been found that calcination under these conditions leads to a catalyst support having a high surface area and large pore volume. Consequentially, catalysts based on the support have high activity. The spherical gamma-alumina support obtained typically has a surface area between 150-250 m²/g, a pore volume of from 1.0 to 2.0 ml/g. The mean particle diameter after calcination is typically the same as that of the support after spray-drying. This spherical support forms part of the invention.

The invention also provides a spherical catalyst prepared from the support and a process for its preparation. The catalyst is prepared by impregnating the support described above with from 0.5 to 1.0 wt. % titanium. Impregnation may be accomplished by known techniques such as that described in USP 4,983,693, that is by treatment with titanium halide dissolved in an aliphatic hydrocarbon solvent. The temperature at which this takes place is typically from 80 to 160°C for a period of about 1 hour. Preferably the temperature is 140-160°C.

Following impregnation the reaction product is washed using an aliphatic hydrocarbon solvent such as n-hexane. The product may be stored in the same aliphatic hydrocarbon as was used for washing. The spherical catalyst obtained typically has a surface area of 150 to 250m²/g, a pore volume of 1.0 to 2.0 ml/g. The particle diameter is typically 35 to 65µm, a diameter of 40 to 60µm being preferred.

The supported catalyst may be used in the polymerisation of olefins. Thus, the invention yet further provides a process for the preparation of spherical polyolefins comprising polymerisation of olefins under low pressure in the presence of a Ziegler-Natta catalyst system, characterised in that the catalyst system comprises an alkyl aluminium co-catalyst and the spherical catalyst as described above. The alkyl aluminium co-catalyst activates the supported catalyst.

The olefin being polymerised is preferably ethylene. In this case, the low-pressure polymerization may be effected following the procedure outlined in PI BR 8707098. For the polymerisation of alpha-olefins or copolymerisation reactions, the specific kinematic and thermodynamic conditions are adapted so that the desired spherical polyolefin or copolymer is obtained.

In the preparation of polyethylene, ethylene is usually polymerised in a hydrocarbon solvent for 1 to 3 hours at a temperature of 70 to 85°C at an ethylene pressure of 14 to 20 kgf/cm², the catalyst system having an Al/Ti ratio of from 15/1 to 60/1. Typically the hydrocarbon solvent is n-hexane and the reaction temperature 80°C. The reaction yields spherical ultra-high molecular weight polyethylene. Advantageously, the polyethylene has a bulk density of 0.39 to 0.41 g/cm³, an internal attrition angle of 30 to 40°, a tensile strength 300 to 420 kgf/cm³ (e.g. 350 to 420 kgf/cm²), an elongation of 195-260% (e.g. 216 to 234%), a Rockwell hardness of 60 to 70, typically 60 to 67 (e.g. 61 to 65), does not flow when subjected to the ASTM D-1238 melt flow index test and does not break when subjected to the ASTM D-256 Izod impact strength test.

The following Examples illustrates the invention.

### EXAMPLES 1-4

An aqueous slurry of ammonium dawsonite having a slurry concentration of 8.3 weight % was prepared. This was spray-dried at a spray-drier entrance temperature of 400°C, the exit temperature being 150°C. A spherical catalyst support having particles of mean diameter 40 microns was obtained. After calcination at 700°C for 5 hours on this support was impregnated titanium by treatment with TiCl₄ in n-hexane. The impregnation reaction took place at 120°C for 1 hour with stirring. The catalyst obtained has spherical morhology. Ethylene at a pressure of 14 kgf/cm² was polymerized in a pilot plant in the presence of this catalyst and Al(Et)₃ co-catalyst. The Al/Ti ratio in the catalyst is as shown in Table 1.

### COMPARATIVE EXAMPLE

The procedure of Examples 1-4 was followed except that the catalyst support was not spray-dried prior to calcination. The catalyst obtained is of the high performance type prepared according to USP 4,983,693, and has non-spherical morphology.

The properties of the catalysts obtained in Examples 1-4 and that of the Comparative Example are given in Tables 1 and 2.

Table 1 shows that the catalysts formed in accordance with the invention have high catalytic activity, comparable to the non-spherical catalyst system of the Comparative Example.

Table 2 compares the physical chemical data and physical properties of polyethylene prepared using the spherical catalysts of the invention with polyethylene formed in accordance with the Comparative Example. The data shown in the table represent average values obtained by testing a number of polyethylene specimens formed using the respective catalysts.

The good mechanical properties of polyethylene formed using the catalyst of the Comparative Example are preserved in polyethylene formed using the spherical catalysts of the invention. However, the polyethylene formed using the catalyst of the invention exhibits improved bulk density and internal attrition angle. This is particularly advantageous with respect to polymer processing. The internal attrition angle is a property of the product polyolefin and is linked to the polymer particle morphology, the attrition angle decreasing as the powder flow increases. [The definition of the attrition angle can be found in "Fluidization and Field Particle Systems", N.Y. Reinhold Publishing Corporation 1960 p. 75 by ZENS,F.A & OTHMER, D.F.)].

**TABLE 1**

| Ex.No | Support Mean Diameter (microns) | Ti cont. (%) | Al/Ti ratio | PE Mean Diameter (microns) | Cat. Activity gPE/gTi/h |
|---|---|---|---|---|---|
| 1 | 40 | 0.55 | 40.2 | 650 | 139.037 |
| 2 | 40 | 0.55 | 38.0 | 530 | 102.930 |
| 3 | 40 | 0.55 | 30.0 | 680 | 238.461 |
| 4 | 40 | 0.69 | 28.0 | 650 | 185.000 |
| Comparative Example | 30 | 0.80 | 20.0 | 300 | 150.600 |

**TABLE 2**

| EX. NO. | Actual Density ASTM D-1601 | Tensile Strength ASTM-D-638 | Elongation ASTM-D-638 (%) | Rockwell Hardness ASTM-785 (R) | Bulk Density ASTM-1895 | Internal Attrition Angle |
|---|---|---|---|---|---|---|
| EX.1 | 0.9357 | 420 | 234 | 65 | 0.39 | 40° |
| EX.2 | 0.9352 | 375 | 216 | 66 | 0.39 | 40° |
| EX.3 | 0.9370 | 370 | 240 | 66 | 0.41 | 30° |
| EX.4 | 0.9369 | 350 | 216 | 61 | 0.41 | 30° |
| Comp. Ex. | 0.9350 | 430 | 290 | 72 | 0.32 | 60° |

The excellent morphology of polymers formed using the spherical catalyst of the invention can be seen from the attached Figures.

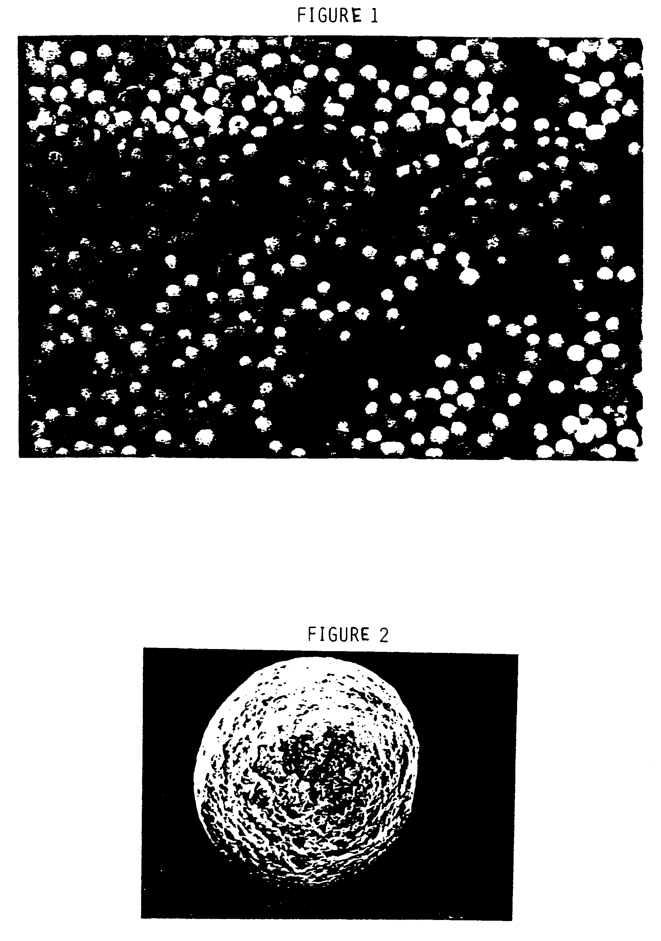

FIGURE 1 is a micrograph (8 x magnification) of spherical polyethylene formed in accordance with the invention.
FIGURE 2 is micrograph of the same polymer as in Figure 1, at a magnification of 80 times.

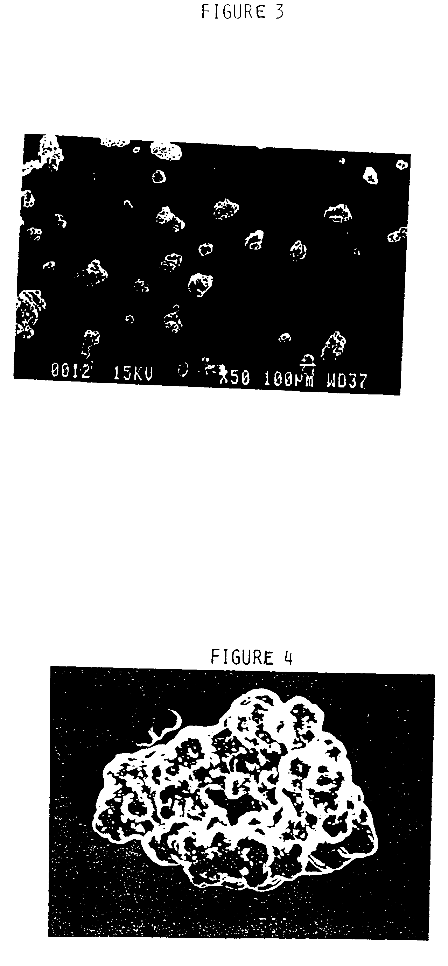

FIGURE 3 is a micrograph (50 x magnification) of a commercially available polyethylene formed in accordance with USP 4,983, 693.
FIGURE 4 is a micrograph of the same commercial polyethylene as in Figure 3, at a magnification of 500 times.

It can be seen that polyethylene formed in accordance with the invention has a significantly more spherical morphology than the commercially obtained polyethylene. This has a direct effect on the physical properties of products formed using the spherical polyethylene as described above.

## Claims

1. A process for the preparation of a spherical alumina catalyst support which comprises calcining an aqueous slurry of ammonium dawsonite comprising from 8 to 10 wt% ammonium dawsonite obtained by reacting an aqueous solution of aluminium sulfate and an aqueous solution of an ammonium bicarbonate, characterised in that the aqueous slurry is spray-dried prior to calcination and in that the support comprises sulphate ions.

2. A process according to claim 1, characterised in that the aqueous slurry of ammonium dawsonite is prepared by reacting aqueous solutions of aluminium sulfate and ammonium bicarbonate at a temperature of from 15 to 20°C and a pH of from 7.5 to 7.7, and filtering the slurry obtained such that the aqueous ammonium dawsonite slurry comprises 10 to 20 wt% residual sulfate ions.

3. A process according to claim 1 or 2, characterised in that the aqueous slurry comprises from 8.3 to 9.4 wt% ammonium dawsonite.

4. A process according to any one of claims 1 to 3, characterised in that the aqueous slurry is spray-dried using a spray drier having a disk atomizer rotating at from 10,000 to 14,000 rpm, the entrance temperature to the spray-drier being from 350-450°C and the flow rate from 3.0 to 4.0 kg/minute.

5. A process according to any one of the preceding claims, characterised in that the calcination takes place at from 600 to 700°C for from 4 to 6 hours.

6. A process according to claim 5, characterised in that the support has a surface area of from 150 to 250m²/g, a pore volume of from 1.0 to 2.0ml/g and a mean particle diameter of from 40 to 60 µm.

7. A process for the preparation of a spherical alumina catalyst which comprises impregnating with titanium a spherical alumina catalyst support, characterized in that the said support is prepared by the process claimed in any one of claims 1 to 6, in that the support is impregnated with from 0.5 to 1.0 wt% titanium, and in that the support comprises sulphate ions.

8. A process according to claim 7, characterised in that the support is impregnated with titanium by treatment with titanium halide dissolved in an aliphatic hydrocarbon solvent at a temperature of 80 to 160°C for about 1 hour.

9. A process according to claim 8, characterised in that the temperature is 140 to 160°C.

10. A spherical alumina catalyst obtainable by the process of claim 7, 8 or 9.

11. A catalyst according to claim 10, characterized in that it has a surface area of 150 to 250m²/g, a pore volume of 1.0 to 2.0 ml/g and a particle diameter of 40 to 60 µm.

12. Use of a catalyst system comprising an alkyl aluminium co-catalyst and a catalyst as defined in claim 10 or 11 in the polymerisation of olefins.

13. Use according to claim 12, characterised in that ethylene is polymerised in a hydrocarbon solvent for 1 to 3 hours at a temperature of 70 to 85°C at an ethylene pressure of 14 to 20 kgf/cm², the catalyst system having an Al/Ti ratio of from 15/1 to 60/1.

14. A spherical alumina catalyst support obtainable by the process claimed in any one of claims 1 to 5, said support comprising sulphate ions.

## Patentansprüche

1. Verfahren zur Bereitung oder Herstellung eines kugelförmigen Aluminiumoxid-Katalysatorträgers, aufweisend das Kalzinieren eines wäßrigen Schlamms von Ammoniumdawsonit, mit 8 bis 10 Gew.% Ammoniumdawsonit, erhalten durch das zur Reaktion bringen einer wäßrigen Lösung von Aluminiumsulphat und einer wäßrigen Lösung von Ammoniumbikarbonat, dadurch gekennzeichnet, daß der wäßrige Schlamm vor der Kalzinierung sprühgetrocknet wird und daß der Träger Sulphationen enthält.

2. Verfahren nach Anspruch 1, dadurch gekennzeichnet, daß der wäßrige Schlamm von Ammoniumdawsonit hergestellt wird durch das zur Reaktion bringen wäßriger Lösungen von Aluminiumsulphat und Ammoniumbikarbonat bei einer Temperatur von 15 bis 20°C und einem pH-Wert von 7,5 bis 7,7, und das Filtern des erhaltenen Schlamms derart, daß der wäßrige Ammoniumdawsonitschlamm 10 bis 20 Gew.% Restsulphationen aufweist.

3. Verfahren nach Anspruch 1 oder 2, dadurch gekennzeichnet, daß der wäßrige Schlamm 8,3 bis 9,4 Gew.% Ammoniumdawsonit aufweist.

4. Verfahren nach einem der Ansprüche 1 bis 3, dadurch gekennzeichnet, daß der wäßrige Schlamm unter Verwendung eines Sprühtrockners mit einem Scheibenpulverisator, der sich mit einer Geschwindigkeit von 10.000 bis 14.000 U/min dreht, sprühgetrocknet wird, wobei die Eingangstemperatur in den Sprühtrockner 350-450°C und die Durchsatzgeschwindigkeit 3,0 bis 4,0 kg/Minute betragen.

5. Verfahren nach einem der vorhergehenden Ansprüche, dadurch gekennzeichnet, daß die Kalzinierung bei 600 bis 700°C über einen Zeitraum von 4 bis 6 Stunden stattfindet.

6. Verfahren nach Anspruch 5, dadurch gekennzeichnet, daß der Träger einen Oberflächenbereich von 150 bis 250 m²/g, ein Porenvolumen von 1,0 bis 2,0 ml/g und einen durchschnittlichen Partikeldurchmesser von 40 bis 60 µm aufweist.

7. Verfahren zur Herstellung oder Bereitung eines kugelförmigen Aluminiumoxidkatalysators, aufweisend das Imprägnieren eines kugelförmigen Aluminiumoxid-Katalysatorträgers mit Titan, dadurch gekennzeichnet, daß der Träger durch das Verfahren nach einem der Ansprüche 1 bis 6 hergestellt wird, daß der Träger mit 0,5 bis 1,0 Gew.% Titan imprägniert wird und daß der Träger Sulphationen aufweist.

8. Verfahren nach Anspruch 7, dadurch gekennzeichnet, daß der Träger durch Behandlung mit in einem aliphatischen Kohlenwasserstofflösungsmittel aufgelöstem Titanhalogenid bei einer Temperatur von 80 bis 160°C während etwa 1 Stunde mit Titan imprägniert wird.

9. Verfahren nach Anspruch 8, dadurch gekennzeichnet, daß die Temperatur 140 bis 160°C beträgt.

10. Kugelförmiger Aluminiumoxidkatalysator, erhalten durch das Verfahren nach Anspruch 7, 8 oder 9.

11. Katalysator nach Anspruch 10, dadurch gekennzeichnet, daß er einen Oberflächenbereich von 150 bis 250 m²/g, ein Porenvolumen von 1,0 bis 2,0 ml/g und einen Partikeldurchmesser von 40 bis 60 µm aufweist.

12. Verwendung eines Katalysatorsystems, aufweisend einen Alkylaluminium-Co-Katalysator und einen Katalysator nach Anspruch 10 oder 11, bei der Polymerisierung von Olefinen.

13. Verwendung nach Anspruch 12, dadurch gekennzeichnet, daß Ethylen in einem Kohlenwasserstofflösungsmittel während 1 bis 3 Stunden bei einer Temperatur von 70 bis 85°C und einem Ethylendruck von 14 bis 20 kgf/cm² polymerisiert wird, wobei das Katalysatorsystem ein Verhältnis von Al/Ti von 15/1 bis 60/1 aufweist.

14. Kugelförmiger Aluminiumoxid-Katalysatorträger, erhalten durch das Verfahren nach einem der Ansprüche 1 bis 5, wobei der Träger Sulphatione aufweist.

## Revendications

1. Procédé de préparation d'un support pour catalyseur sphérique en alumine qui comprend la calcination d'une suspension aqueuse de dawsonite d'ammonium contenant entre 8 et 10% en poids de dawsonite d'ammonium, obtenue en faisant réagir une solution aqueuse de sulfate d'aluminium et une solution aqueuse de bicarbonate d'ammonium, caractérisé en ce que la suspension aqueuse est séchée par pulvérisation avant calcination, et en ce que le support comprend des ions sulfate.

2. Procédé selon la revendication 1, caractérisé en ce que la suspension aqueuse de dawsonite d'ammonium est préparée en faisant réagir des solutions aqueuses de sulfate d'aluminium et de bicarbonate d'ammonium à une température comprise entre 15 et 20°C et à un pH compris entre 7,5 et 7,7, et en filtrant la suspension obtenue de façon à ce que la suspension aqueuse de dawsonite d'ammonium comprenne 10 à 20% en poids d'ions sulfate résiduels.

3. Procédé selon la revendication 1 ou 2, caractérisé en ce que la suspension aqueuse comprend entre 8,3 et 9,4% en poids de dawsonite d'ammonium.

4. Procédé selon l'une quelconque des revendications 1 à 3, caractérisé en ce que la suspension aqueuse est séchée par pulvérisation en utilisant un sécheur par pulvérisation comportant un disque d'atomisation tournant entre 10 000 et 14 000 tr/mn, la température d'entrée dans le sécheur par pulvérisation étant comprise entre 350 et 450°C, et le débit étant compris entre 3,0 et 4,0 kg/mn.

5. Procédé selon l'une quelconque des revendications précédentes, caractérisé en ce que la calcination a lieu entre 600 et 700°C pendant de 4 à 6 heures.

6. Procédé selon la revendication 5, caractérisé en ce que le support a une aire surfacique située entre 150 et 250 m²/g, un volume de pores situé entre 1,0 et 2,0 ml/g, et un diamètre particulaire moyen situé entre 40 et 60 µm.

7. Procédé de préparation d'un catalyseur sphérique en alumine qui comprend l'imprégnation avec du titane d'un support pour catalyseur sphérique en alumine, caractérisé en ce que ledit support est préparé par le procédé revendiqué selon l'une quelconque des revendications 1 à 6, en ce que le support est imprégné avec de 0,5 à 1,0% en poids de titane, et en ce que le support contient des ions sulfate.

8. Procédé selon la revendication 7, caractérisé en ce que le support est imprégné avec du titane par traitement avec un halogénure de titane dissous dans un solvant hydrocarboné aliphatique à une température de 80 à 160°C pendant environ 1 heure.

9. Procédé selon la revendication 8, caractérisé en ce que la température est de 140 à 160°C.

10. Catalyseur sphérique en alumine susceptible d'être obtenu par le procédé de la revendication 7, 8 ou 9.

11. Catalyseur selon la revendication 10, caractérisé en ce qu'il possède une aire surfacique de 150 à 250 m²/g, un volume de pores de 1,0 à 2,0 ml/g et un diamètre particulaire de 40 à 60 µm.

12. Utilisation d'un système catalytique comprenant un co-catalyseur à base d'un alkyl d'aluminium et un catalyseur tel que défini dans la revendication 10 ou 11 pour la polymérisation des oléfines.

13. Utilisation selon la revendication 12, caractérisée en ce que de l'éthylène est polymérisé dans un solvant hydrocarboné pendant 1 à 3 heures à une température de 70 à 85°C et sous une pression d'éthylène de 14 à 20 kgf/cm², le système catalytique ayant un rapport Al/Ti compris entre 15/1 et 60/1.

14. Support pour catalyseur sphérique en alumine susceptible d'être obtenu par le procédé revendiqué dans l'une quelconque des revendications 1 à 5, ledit support comprenant des ions sulfate.
